(19) Europäisches Patentamt
European Patent Office
Office européen des brevets

(11) **EP 4 745 255 A1**

(12) **EUROPEAN PATENT APPLICATION**
published in accordance with Art. 153(4) EPC

(43) Date of publication:
**20.05.2026 Bulletin 2026/21**

(21) Application number: **24910827.5**

(22) Date of filing: **17.12.2024**

(51) International Patent Classification (IPC):
*C22C 27/04* (2006.01)   *C22C 1/04* (2023.01)
*C22C 1/059* (2023.01)   *B22F 5/12* (2006.01)
*B22F 3/10* (2006.01)   *B22F 3/17* (2006.01)
*B22F 9/22* (2006.01)

(86) International application number:
**PCT/CN2024/139851**

(87) International publication number:
**WO 2025/139896 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.12.2023 CN 202311825939**

(71) Applicant: **Xiamen Honglu Tungsten-molybdenum Industry Co., Ltd**
**Xiamen, Fujian 361000 (CN)**

(72) Inventors:
• **TANG, Minfeng**
**Xiamen, Fujian 361000 (CN)**

• **GUO, Donghong**
**Xiamen, Fujian 361000 (CN)**
• **FANG, Yijin**
**Xiamen, Fujian 361000 (CN)**
• **LV, Sheng**
**Xiamen, Fujian 361000 (CN)**
• **HUANG, Canxin**
**Xiamen, Fujian 361000 (CN)**
• **JIANG, Xiangcao**
**Xiamen, Fujian 361000 (CN)**
• **ZHANG, Weibing**
**Xiamen, Fujian 361000 (CN)**
• **YU, Chunlei**
**Xiamen, Fujian 361000 (CN)**

(74) Representative: **Potter Clarkson**
**Chapel Quarter**
**Mount Street**
**Nottingham NG1 6HQ (GB)**

(54) **TUNGSTEN ALLOY WIRE, PREPARATION METHOD THEREFOR AND USE THEREOF IN SEMICONDUCTOR MATERIAL CUTTING**

(57) The present application relates to the technical field of tungsten alloy materials, and in particular to a tungsten alloy wire, a preparation method therefor and a use thereof in semiconductor material cutting. A tungsten alloy is composed of the following elements in percentage by mass: 0.4-1.1wt% of L, 0.001-0.25wt% of Z and the balance being tungsten and inevitable impurities, wherein L is one or more of lanthanum, cerium, praseodymium, neodymium, gadolinium and erbium; Z comprises oxygen and boron; a wire has a wire diameter of 20-60 μm, and has linear L or a compound of L along the wire axis, and the radial average width D of L or the compound of L is less than or equal to 5 nm. According to the present application, a linear L element is doped in a tungsten matrix, and the radial average width of L is controlled to be smaller than or equal to 5 nm, so that the wire having a wire diameter of 20-60 μm has a tensile strength of 5000 MPa or above, and the machining performance of the tungsten alloy wire is enhanced.

FIG. 3

## Description

The present application claims priority to the Chinese Patent Application No. 2023118259397, filed on December 26, 2023, with the China National Intellectual Property Administration, and entitled "TUNGSTEN ALLOY WIRE, PREPARATION METHOD THEREFOR AND USE THEREOF", which is incorporated in its entirety herein by reference.

## TECHNICAL FIELD

The present application relates to the technical field of tungsten alloy materials, in particular to a tungsten alloy wire, a preparation method therefor and use thereof in semiconductor material cutting.

## BACKGROUND

Tungsten-based alloys are alloy materials made by powder metallurgy or injection molding, with refractory metal tungsten as the hard phase and metal nickel, iron, copper or silver as the binder phase. Due to their excellent thermal, mechanical, electrical and chemical properties, they are widely used in fields such as automotive, medical, aerospace, military and defense industries.

To further improve the comprehensive mechanical properties of tungsten alloy wires, existing methods involve doping the tungsten matrix with rare earth elements or rare earth compounds as a second-phase dispersion-strengthened tungsten material. However, these methods are prone to solid-liquid phase transformation during high-temperature sintering and recrystallization annealing. During this transformation, many second-phase particles merge and then grow larger. Furthermore, current pressure processing methods can lead to uneven deformation during swaging or drawing, causing the second-phase particles to fracture and failing to effectively improve the strength of the tungsten matrix. This also results in numerous cracks forming at the junction of the second-phase particles and the tungsten wire, leading to wire breakage and limiting the diameter size in deep-processing of tungsten wires.

For example, Chinese patent document CN113186438A discloses an alloy wire and a preparation method therefor and use thereof, in which the content of lanthanum oxide is 0.1wt% to 2.0wt%. When the wire diameter of the wire is below 40 $\mu$m, the tensile strength of the alloy wire can reach 4800MPa. However, due to the large amount of rare earth oxides added, the defects of the wire increase sharply, and the proportion of wire breakage failure during the preparation process increases significantly. At the same time, the aggregation of rare earth second phase leads to excessive deformation resistance of the alloy wire, resulting in a decline in the strength increase after wire refinement and deterioration of processing performance, thus failing to meet the requirements of engineering.

## SUMMARY OF THE INVENTION

To address the problem of numerous cracks and wire breaks in tungsten alloy wires caused by the introduction of a second phase in the prior art, the present application provides a tungsten alloy wire, wherein the tungsten alloy is composed of the following elements in percentage by mass: 0.4wt% to 1.1wt% of L, 0.001wt% to 0.25wt% of Z and the balance being tungsten and inevitable impurities;

wherein the L is one or more selected from the group consisting of lanthanum, cerium, praseodymium, neodymium, gadolinium and erbium; the Z comprises oxygen and boron; and the tungsten alloy wire has a wire diameter ranging from 20 $\mu$m to 60 $\mu$m, and has linear forms of the L or an L compound along the axial direction of the tungsten alloy wire, and the L or L compound has a radial average width D of less than or equal to 5 nm.

For example, L represents lanthanum; or cerium; or praseodymium; or lanthanum and cerium; or lanthanum and neodymium; or lanthanum and praseodymium; or lanthanum and gadolinium; or cerium and praseodymium; or cerium and neodymium; or praseodymium and gadolinium; or praseodymium and erbium; or neodymium and gadolinium; or lanthanum, cerium and praseodymium; or lanthanum, cerium and erbium; or lanthanum, praseodymium and neodymium; or cerium, praseodymium and neodymium; or praseodymium, neodymium, gadolinium and erbium, etc.

For example, the mass percentage of L is 0.4% to 1.1%; or 0.4% to 1.0%; or 0.4% to 0.8%; or 0.4% to 0.6%; or 0.4% to 0.5%; or 1.0% to 1.1%; or 0.8% to 1.1%; of course, it can also be 0.4%, 0.41%, 0.5%, 0.55%, 0.6%, 0.8%, 0.86%, 1.0%, 1.05%, etc.

The mass percentage of Z is 0.001% to 0.25%; or 0.001% to 0.05%; or 0.001% to 0.1%; or 0.001% to 0.2%; or 0.005% to 0.1%; or 0.1% to 0.25%; or 0.1% to 0.2%; or 0.05% to 0.2%; of course, it can also be 0.0009%, 0.001%, 0.005%, 0.01%, 0.015%, 0.02%, 0.05%, 0.1%, 0.15%, 0.2%, etc.

The wire has a wire diameter ranging from 20 $\mu$m to 60 $\mu$m, for example 20 $\mu$m, 28 $\mu$m, 30 $\mu$m, 38 $\mu$m, 40 $\mu$m, 48 $\mu$m, 50 $\mu$m, 55 $\mu$m, 58 $\mu$m, 60 $\mu$m, etc. The tungsten alloy wire can be uniform or not completely uniform, and can also exhibit differences of several percentages, such as 1%, depending on the part.

It should be noted that the term "linear" refers to the morphology where the dimension of L or L compound in the wire along the axial direction is much larger than the dimension along the radial direction.

The L compound can be an oxide, such as lanthanum oxide, cerium oxide, praseodymium oxide, neodymium oxide, gadolinium oxide, erbium oxide, etc., or of course, it also can be other forms of compounds.

In some embodiments, the Z further comprises carbon.

In some embodiments, in the wire, tungsten grains have a radial average width of less than or equal to 80 nm; and preferably a ratio $\gamma$ of the number of the L or L compound in the wire to the number of tungsten grains satisfies: $3 \leq \gamma \leq 10$.

Preferably, the number of surface defects in the wire is $\leq 10$ per 100 meters.

Preferably, the wire has a dislocation density of greater than or equal to $5*10^9/\text{mm}^2$.

To ensure the final strength of the tungsten alloy wire, it is necessary to guarantee that the wire has good comprehensive mechanical properties and good processing feasibility. Therefore, the ratio $\gamma$ of the number of the L or L compound in the wire to the number of tungsten grains should be between 3 and 10. If $\gamma < 3$, the breaking force of the wire cannot be met. If $\gamma > 10$, the processing performance of the wire will deteriorate sharply, leading to a sharp increase in cracks in the wire and severe wire breakage.

Preferably, when the wire diameter of the wire is >50 $\mu$m and $\leq$60 $\mu$m, the radial average width D of the L or L compound is $\leq$5nm, and the tensile strength of the wire is $\geq$5000 MPa; when the wire diameter of the wire is >40 $\mu$m and $\leq$50 $\mu$m, the radial average width D of the L or L compound is $\leq$4 nm, and the tensile strength of the wire is $\geq$5500 MPa; when the wire diameter of the wire is >30 $\mu$m and $\leq$40 $\mu$m, the radial average width D of the L or L compound is $\leq$3 nm, and the tensile strength of the wire is $\geq$6000 MPa; when the wire diameter of the wire is $\geq$20 $\mu$m and $\leq$30 $\mu$m, the radial average width D of the L or L compound is $\leq$2 nm, and the tensile strength of the wire is $\geq$7000 MPa.

The present application also provides a method for preparing the above-mentioned tungsten alloy wire, comprising wet doping, powdering, pressing, sintering, cogging and pressure processing.

In some embodiments, the wet doping process comprises: uniformly dispersing blue tungsten powder in deionized water to obtain a blue tungsten suspension; uniformly dispersing a nanopowder of the L compound in an alkaline solution with pH>11 to form a second suspension; then spraying a solution containing Z element and the second suspension into the blue tungsten suspension in sequence; and heating and drying to obtain doped blue tungsten powder.

Preferably, after the nanopowder of the L compound is uniformly dispersed in the alkaline solution with pH>11, it is stirred at high speed using a stirring device with a stirring speed of 1000 r/min to 2000 r/min.

Preferably, the solution containing Z element is a salt solution of element Z or a suspension of a compound containing element Z.

Preferably, the solution of element Z is diluted to a volume ratio of 1:20 or higher;

Preferably, the drying method is rapid vacuum heating drying.

By preparing a suspension of L element compounds, fine particles are directly and uniformly incorporated into blue tungsten powder. These fine particles act as heterogeneous nuclei, co-crystallizing with tungsten particles. This method enables the production of tungsten alloy powders with more uniform dispersion. It eliminates the need for acid salts of the element, allowing for a wider range of dispersed particles and resulting in more stable and reliable tungsten materials.

In some embodiments, the blue tungsten powder is prepared by feeding ammonium paratungstate powder into a reduction furnace and conducting reduction at 400°C to 600°C under an atmosphere of hydrogen and nitrogen, wherein the ammonium paratungstate powder has a bed thickness of less than 10 mm, the hydrogen flow rate in the reduction furnace is in a range from 20 L/min to 40 L/min, the nitrogen flow rate is in a range from 80 L/min to 160L/min, and the resulting blue tungsten powder has an oxygen index of 2.85±0.05 with an ammonium tungsten bronze phase content of greater than 80%.

The blue tungsten powder is prepared using a hydrogen-nitrogen mixed gas as a reducing protective medium. The properties of the finished blue tungsten powder are controlled by the thickness of the material layer and the flow rate and flow direction of the hydrogen gas. The oxygen index of the blue tungsten is 2.85±0.05. The blue tungsten with an ammonium tungsten bronze phase ratio of more than 80% is doped. The blue tungsten particles are coarse and have many surface cracks, which is conducive to the entry of rare earth solution and improves the doping effectiveness. This enhances the uniformity of the second phase distribution in the tungsten wire and improves the comprehensive mechanical and processing properties of the tungsten wire.

In some embodiments, the powdering process comprises: reducing the doped blue tungsten powder to obtain alloy powder A with a particle size ranging from 1.5 $\mu$m to 2.6 $\mu$m and alloy powder B with a particle size ranging from 3.8 $\mu$m to 4.5 $\mu$m; and then mixing the alloy powder A and the alloy powder B to obtain a mixed powder.

Preferably, the alloy powder A is prepared by first reducing the doped blue tungsten powder in a hydrogen reduction furnace at 500°C to 800°C, followed by a second reduction in the hydrogen reduction furnace at 700°C to 1000°C, to obtain the alloy powder A with the particle size ranging from 1.5 $\mu$m to 2.6 $\mu$m.

Preferably, the alloy powder B is prepared by reducing the doped blue tungsten powder in the hydrogen reduction furnace at 700°C to 1100°C to obtain the alloy powder B with the particle size ranging from 3.8 $\mu$m to 4.5$\mu$m.

Preferably, the alloy powder A and the alloy powder B are mixed at a mass ratio of 1:(1-4). More preferably, the alloy powder A and the alloy powder B are mixed at a mass ratio of 1:(1-2).

By mixing fine-grained tungsten alloy powder prepared by two reduction processes with coarse-grained tungsten alloy powder prepared by one high-temperature reduction process, the uneven local doping of coarse-grained powder during the reduction process is avoided, and the agglomeration and enrichment of fine-grained powder after reduction is effectively suppressed. This prevents microscopic uneven doping of alloy powder in subsequent pressure processing, thus reducing the risk of wire breakage.

In some embodiments, the sintering process comprises: subjecting the pre-sintered billet obtained by the pressing to electric current sintering in two stages: the first sintering at a current intensity of 60% of a tungsten bar melting current for 30 to 45 minutes followed by cooling, and the second sintering at the current intensity of 90% to 92% of the tungsten bar melting current for 40 to 80 minutes, to obtain a sintered billet with a density of 18.6 g/cm$^3$ or higher.

Preferably, the second sintering is carried out in a hydrogen atmosphere, wherein the hydrogen purity is >99.5%.

A two-stage electric current high-temperature sintering process is adopted, which is different from the traditional single-stage electric current high-temperature sintering and the combined sintering mode of electric current sintering with medium-frequency indirect sintering. The density of billets obtained by conventional single-stage electric current sintering and combined sintering of vertical melting and medium frequency can only reach 17.2 g/cm$^3$ to 18.4 g/cm$^3$, which is basically below 92% of the theoretical density. Furthermore, the uniformity of the microstructure between the edge and the core varies greatly, resulting in poor consistency of the tungsten wire fiber size. This leads to uneven processing microstructure during subsequent tungsten alloy material processing, making the wire easy to break. The present application achieves the following results: by first sintering with electricity, impurity elements in the tungsten billet are fully volatilized and the voids on the surface of the tungsten billet are closed; in the second high-temperature sintering with electricity, the purity of hydrogen is increased to improve the density of the billet, resulting in a uniform billet with a density of over 96%, improving the consistency of the billet structure, improving the consistency of the tungsten alloy wire fibers, and improving the winding performance of the tungsten alloy wire.

In some embodiments, the pressure processing process comprises: recrystallizing and annealing the alloy rod obtained from the cogging; then swaging the annealed alloy rod into a tungsten rod with a diameter ranging from 2.5 mm to 4.0 mm through multiple passes of continuous swaging apparatus; and subjecting the tungsten rod to coarse drawing through drawing dies of different specifications, wherein the coarse drawing is repeated multiple times with a reduction ratio ranging from 35% to 60% per pass, thereby obtaining a coarse tungsten alloy wire with a diameter ranging from 0.3 mm to 0.5 mm.

Using a high reduction ratio of 35% to 60% to process tungsten alloy wire results in more developed wire fibers, which facilitates the linearization of L element and their compounds during processing, thereby improving the breaking strength of the wire.

In some embodiments, in the pressure processing, the alloy rod obtained from the cogging is heated to 2000°C to 2600°C by a medium- or high-frequency induction coil and then subjected to recrystallization annealing.

In some embodiments, when the tungsten alloy wire is drawn to a diameter ranging from 0.3 mm to 0.5mm, it is annealed at an annealing temperature ranging from 1300°C to 1800°C, and after the annealing, the tungsten alloy wire is cooled in an oxygen-containing environment; and after the annealing, the tungsten alloy wire is drawn repeatedly to obtain tungsten alloy wires of different diameter specifications. When tungsten alloy wire is drawn to a diameter of less than 0.3 mm, it is no longer annealed. After annealing and cooling, the wire is drawn through drawing dies of different specifications, and the drawing process is repeated multiple times to draw the wire to the required diameter.

By subjecting the wire to annealing followed by oxygen cooling treatment, the content and thickness of the oxide layer on the surface of the tungsten alloy wire can be increased, which can effectively improve the wire lubrication layer, thereby improving the drawing conditions, ensuring the feasibility of high reduction ratio drawing of the wire, and thus significantly reducing the probability of wire breakage.

The present application also provides use of the above-mentioned tungsten alloy wire in the fields of cutting, cut-resistant protection, cables, screen printing, ropes or textiles

The present application also provides use of the above-mentioned tungsten alloy wire in semiconductor material cutting.

Compared with the prior art, the tungsten alloy wire provided in the present application has the following advantages:

According to the present application, one or more rare earth elements/rare earth compounds are used as the second phase to strengthen tungsten materials. By controlling the L element to be linearly doped between the tungsten matrix and making the radial average width of L less than 5 nm, the cracks and wire breaks caused by the second-phase particles during subsequent pressure processing are greatly reduced. This helps to ensure the mechanical strength of the tungsten alloy wire, enabling the wire to have a tensile strength of more than 5000 MPa at a wire diameter of 20 μm to 60 μm, and at a wire diameter of 60 μm. At the same time, the processing performance of the tungsten alloy wire is enhanced.

## BRIEF DESCRIPTION OF THE DRAWINGS

In order to more clearly describe specific implementations of the present application or technical solutions in the prior art, the accompanying drawings required for describing the specific implementations or the prior art will be briefly introduced below. Apparently, the accompanying drawings in the following description are some implementations of the present application. Those ordinarily skilled in the art may also obtain other accompanying drawings according to these accompanying drawings without making creative work.

FIG. 1 is a transmission electron microscope image of the 28 $\mu$m tungsten alloy wire provided in Example 1.1 of the present application, with a scale bar of 100 nm;
FIG. 2 is another transmission electron microscope image of the 28 $\mu$m tungsten alloy wire provided in Example 1.1 of the present application;
FIG. 3 is a schematic diagram of the radial average width measurement of the L or L compound provided in the present application.

## DETAILED DESCRIPTION

In order to clarify the object, technical solution, and advantages of the examples of the present application, the following will provide a clear and complete description of the technical solution in the examples of the present application. Obviously, the described examples are a part of the examples of the present application, not all of them. Based on the examples of the present application, all other examples obtained by ordinary skilled persons in the art without creative work are within the scope of protection of the present application.

**The present application provides a tungsten alloy wire, wherein the tungsten alloy is composed of the following elements in percentage by mass:**

0.4wt% to 1.1wt% of L, 0.001wt% to 0.25wt% of Z and the balance being tungsten and inevitable impurities;

wherein the L is one or more selected from the group consisting of lanthanum, cerium, praseodymium, neodymium, gadolinium and erbium;

the Z comprises oxygen and boron; and

the tungsten alloy wire has a wire diameter ranging from 20 $\mu$m to 60 $\mu$m, and has linear forms of the L or an L compound along the axial direction of the tungsten alloy wire, and the L or L compound has a radial average width D of less than or equal to 5 nm.

It is understandable that inevitable impurities are other elements introduced during the preparation process.
Optionally, the Z further comprises carbon, that is, the Z comprises oxygen, boron and carbon.
The tungsten grains have a radial average width of less than or equal to 80 nm;
a ratio $\gamma$ of the number of the L or L compound in the wire to the number of tungsten grains satisfies: $3 \leq \gamma \leq 10$.
When the wire diameter of the wire is >50 $\mu$m and ≤60 $\mu$m, the radial average width D of the L or L compound is ≤5nm, and the tensile strength of the wire is ≥5000 MPa;

when the wire diameter of the wire is >40 $\mu$m and ≤50 $\mu$m, the radial average width D of the L or L compound is ≤4 nm, and the tensile strength of the wire is ≥5500 MPa;

when the wire diameter of the wire is >30 $\mu$m and ≤40 $\mu$m, the radial average width D of the L or L compound is ≤3 nm, and the tensile strength of the wire is ≥6000 MPa;

when the wire diameter of the wire is ≥20 $\mu$m and ≤30 $\mu$m, the radial average width D of the L or L compound is ≤2 nm, and the tensile strength of the wire is ≥7000 MPa; and

the number of surface defects on the wire is ≤10 per 100 meters.

The wire has a dislocation density of greater than or equal to $5*10^9$/mm$^2$.
In the wire, the proportion of tungsten grains with a grain boundary angle ≤15° exceeds 80%.
**The present application provides a method for preparing a tungsten alloy wire, comprising wet doping, powdering, pressing, sintering, cogging and pressure processing, etc.**

The wet doping process comprises: uniformly dispersing blue tungsten powder in deionized water to obtain a blue tungsten suspension; uniformly dispersing a nanopowder of the L compound in an alkaline solution with pH>11 to form a second suspension; then spraying a solution containing Z element and the second suspension into the blue tungsten suspension in sequence; and heating and drying to obtain doped blue tungsten powder.

The method for preparing the blue tungsten powder comprises: feeding ammonium paratungstate powder into a reduction furnace and conducting reduction at 400°C to 600°C under an atmosphere of hydrogen and nitrogen, wherein the ammonium paratungstate powder has a bed thickness of less than 10 mm, the hydrogen flow rate in the reduction furnace is in a range from 20 L/min to 40 L/min, the nitrogen flow rate is in a range from 80 L/min to 160L/min, and the resulting blue tungsten powder has an oxygen index of 2.85±0.05 with an ammonium tungsten bronze phase content of greater than 80%.

The powdering process comprises: first reducing the doped blue tungsten powder in a hydrogen reduction furnace at 500°C to 800°C, followed by a second reduction in the hydrogen reduction furnace at 700°C to 1000°C, to obtain the alloy powder A with the particle size ranging from 1.5 $\mu$m to 2.6 $\mu$m;

reducing the doped blue tungsten powder in the hydrogen reduction furnace at 700°C to 1100°C to obtain the alloy powder B with the particle size ranging from 3.8 $\mu$m to 4.5$\mu$m; and

mixing the alloy powder A and the alloy powder B at a mass ratio of 1:(1-4) to obtain a mixed powder.

The sintering process comprises: subjecting the pre-sintered billet obtained by the pressing to electric current sintering in two stages: the first sintering at a current intensity of 60% of a tungsten bar melting current for 30 to 45 minutes followed by cooling, and the second sintering at the current intensity of 90% to 92% of the tungsten bar melting current for 40 to 80 minutes, to obtain a sintered billet with a density of 18.6 g/cm$^3$ or higher.

Preferably, the second sintering is carried out in a hydrogen atmosphere, wherein the hydrogen purity is >99.5%;

The pressure processing process comprises: heating the alloy rod obtained from the cogging to 2000°C to 2600°C by a medium- or high-frequency induction coil and then subjecting it to recrystallization annealing; then swaging the annealed alloy rod into a tungsten rod with a diameter ranging from 2.5 mm to 4.0 mm through multiple passes of continuous swaging apparatus; and

subjecting the tungsten rod to coarse drawing through drawing dies of different specifications, wherein the coarse drawing is repeated multiple times with a reduction ratio ranging from 35% to 60% per pass, thereby obtaining a coarse tungsten alloy wire with a diameter ranging from 0.3 mm to 0.5 mm.

When the tungsten alloy wire is drawn to a diameter ranging from 0.3 mm to 0.5mm, it is annealed at an annealing temperature ranging from 1300°C to 1800°C, and after the annealing, the tungsten alloy wire is cooled in an oxygen-containing environment.

After annealing and cooling, the wire is drawn through drawing dies of different specifications, and the drawing process is repeated multiple times to draw the wire to the required diameter.

Furthermore, the pressing and cogging steps described above are preferably, but not limited to, carried out as follows:

Pressing: the mixed powder is pressed into compacts weighing 1.5-6 kg each by isostatic pressing at 140 MPa to 240 MPa, and the compacts are pre-sintered at 1200°C to 1400°C for 10 min to 30 min in a hydrogen atmosphere to increase the strength of the compacts.

Cogging: using a multi-roll mill at 1600°C to 1700°C, sintered billets with a diameter of 15 mm to 25 mm are continuously rolled into alloy rods with a diameter of 8.0 mm to 12.0 mm.

The preparation method further comprises an electrolytic cleaning post-treatment step to facilitate subsequent electroplating operations.

Therefore, the present application provides the elemental composition of tungsten alloys in the examples and comparative examples shown in Table 1 below:

Table 1 (Unit:wt%)

| Elemental Composition | Example 1.1 | | Example 1.2 | | Example 1.3 | | Example 1.4 | |
|---|---|---|---|---|---|---|---|---|
| L element | cerium | 0.4 | cerium | 0.4 | cerium | 0.2 | cerium | 0.55 |
| | praseodymium | 0.4 | praseodymium | 0.4 | praseodymium | 0.2 | praseodymium | 0.55 |
| Z element | boron | 0.03 | boron | 0.03 | boron | 0.01 | boron | 0.03 |
| | oxygen | 0.15 | oxygen | 0.15 | oxygen | 0.08 | oxygen | 0.22 |
| Elemental Composition | Comparative Example 1.1 | | Comparative Example 1.2 | | Comparative Example 1.3 | | Comparative Example 1.4 | |
| L element | lanthanum | 0.8 | cerium | 0.8 | cerium | 0.4 | cerium | 0.6 |
| | - | - | - | - | praseodymium | 0.4 | praseodymium | 0.6 |
| Z element | - | - | - | - | boron | 0.1 | boron | 0.03 |
| | oxygen | 0.138 | oxygen | 0.183 | oxygen | 0.171 | oxygen | 0.274 |

The "-" indicates that the corresponding element has not been added.

**Example 1.1**

This example describes a tungsten alloy wire prepared according to the present application, the material elemental composition of which comprises: 0.4wt% cerium, 0.4wt% praseodymium, 0.03wt% boron, 0.15wt% oxygen, with the balance being tungsten and inevitable impurities.

The preparation steps are as follows:

Step 1: blue tungsten preparation: ammonium paratungstate powder was subjected to hydrogen reduction in reverse hydrogen continuous reduction furnaces at 400°C, 450°C, 500°C, and 560°C. The thickness of the ammonium paratungstate powder layer was 8 mm, the hydrogen flow rate was 30 L/min, and the nitrogen flow rate was 140 L/min. Blue tungsten powder was obtained, with an oxygen index of 2.87 and an ammonium tungsten bronze phase fraction of 82%.

Step 2: wet doping: the blue tungsten powder obtained in step 1 was uniformly dispersed in deionized water to obtain a blue tungsten suspension, in which the volume ratio of blue tungsten powder to deionized water was 1:15. An appropriate amount of boric acid crystal powder and deionized water were mixed at a volume ratio of 1:20 to obtain a boric acid solution; an appropriate amount of cerium oxide and praseodymium oxide nanoparticles were uniformly dispersed in a sodium hydroxide solution with a pH of 13, and then stirred at a high speed of 1500 r/min in a high-speed emulsifying equipment to form a second suspension. Then the boric acid solution and the second suspension were sprayed sequentially into the blue tungsten suspension through a vacuum pipeline. After the spraying was completed, rapid vacuum heating and drying were performed to obtain doped blue tungsten powder.

Step 3: powder preparation: the doped blue tungsten powder obtained in step 2 was first reduced in a three-temperature zone hydrogen reduction furnace at 500°C, 650°C, and 750°C, and then second reduced in a four-temperature zone hydrogen reduction furnace at 700°C, 810°C, 870°C, and 920°C to obtain alloy powder A with a particle size of 2.0 $\mu$m.

The doped blue tungsten powder obtained in step 2 was reduced in a four-temperature zone hydrogen reduction furnace at 720°C, 820°C, 870°C, and 950°C to obtain alloy powder B with a particle size of 4.1 $\mu$m; alloy powder A and alloy powder B were placed in the high-energy powder mixer at a ratio of 1:1.5, and mixed for 120 minutes to obtain a homogeneous mixed powder with a particle size of 3.0 $\mu$m.

Step 4: pressing: the mixed powder obtained in step 3 was pressed into compacts weighing 3 kg each by isostatic pressing under a pressure of 160 MPa. The compacts were then pre-sintered for 20 minutes in a hydrogen atmosphere at 1300°C to obtain pre-sintered billets.

Step 5: sintering: the pre-sintered billets obtained in step 4 were sintered by electric current. The sintering was carried out in two stages. The first sintering was carried out for 40 minutes at a current intensity of 60% of the tungsten bar melting current, and then the temperature was lowered. The sintering shroud was then blown and dried. The second sintering was carried out for 60 minutes at a current intensity of 91% of the tungsten bar melting current, resulting in sintered billets with a density of 18.68 g/cm$^3$.

Step 6: cogging: the sintered billets with a diameter of 20mm were continuously rolled into 8.0mm alloy rods by using a multi-roll mill at a heating temperature of 1600°C.

Step 7: pressure processing: the alloy rod obtained in step 6 was heated to 2400°C through a high-frequency induction coil for recrystallization annealing, and then swaged through multiple passes of continuous swaging apparatus to a tungsten rod with a diameter of 3.0 mm.

Step 8: tungsten rods were subjected to redrawing processing through different specifications of drawing dies. The drawing passes were repeated with a reduction ratio of 35% to 60% to obtain tungsten alloy thick wire materials with a diameter specification of 0.5 mm.

Step 9: annealing: when the tungsten alloy wire obtained in step 8 was processed to $\varphi$0.5 mm, it was annealed. After annealing, the tungsten alloy wire was cooled in an oxygen environment. The annealing temperature for $\varphi$0.5 mm was 1600°C, and the mass percentage of oxide on the wire surface was 1.12%.

Step 10: the annealed wire obtained in step 9 was drawn through different specifications of drawing dies. The drawing process was repeated multiple times until the diameters are 58 $\mu$m, 48 $\mu$m, 38 $\mu$m, 28 $\mu$m, and 20 $\mu$m respectively.

Step 11: electrolytic cleaning: the tungsten alloy wire obtained in step 10 was first electrolyzed in a potassium hydroxide solution with a concentration of 22wt%, which included 12 groups of alternating-current (AC) electrolytic cells. Then, it was electrolyzed successively in 6 groups of potassium hydroxide solution with a concentration of 6wt%, which included 5 groups of direct-current (DC) electrolytic cells. The electrolysis speed was 180 m/min. After electrolysis, the surface was cleaned with deionized water to obtain white fine tungsten wires with different diameters.

### Example 1.2

The material elemental composition is the same as in Example 1.1. The difference between Example 1.2 and Example 1.1 is that in step 3, alloy powder A and alloy powder B are mixed at a ratio of 1:4; the remaining preparation steps are the same as in Example 1.1.

### Example 1.3

The difference between this example and Example 1.1 is that its material elemental composition comprises 0.2wt% of cerium, 0.2wt% of praseodymium, 0.01wt% of boron, and 0.08wt% of oxygen, with the balance being tungsten and inevitable impurities; the remaining preparation steps are the same as in Example 1.1.

### Example 1.4

The difference between this example and Example 1.1 is that its material elemental composition comprises 0.55wt% of cerium, 0.55wt% of praseodymium, 0.03wt% of boron, and 0.22wt% of oxygen, with the balance being tungsten and inevitable impurities; the remaining preparation steps are the same as in Example 1.1.

### Comparative Example 1.1

The material elemental composition comprises: 0.8wt% of lanthanum, 0.138wt% of oxygen, with the balance being tungsten and inevitable impurities;
The preparation steps are as follows:

Step 1: doping: a suitable amount of lanthanum nitrate solution was uniformly doped into blue tungsten powder. After thorough stirring, the powder was dried at a low temperature of 80°C for 4 hours and then at a high temperature of 120°C.
Step 2: reduction: the material obtained in step 1 was reduced in a four-temperature zone reduction furnace to reduce the doped powder into alloy powder of a suitable particle size in one step.
Step 3: powder mixing: the materials obtained in step 2 was placed into a mixing machine according to different particle size compositions. The powder was mixed at a speed of 8 revolutions per minute for 80 minutes;
Step 4: powder pressing: powders of different particle sizes were pressed into compacts weighing 3.0 kg each using isostatic pressing at 200 MPa. The compacts were then pre-sintered at low temperature in a hydrogen atmosphere to increase their strength.
Step 5: high-temperature sintering: high-temperature sintering was performed to obtain sintered billets with a density of 18.10 g/cm$^3$.
Step 6: cogging: the sintered billet with a diameter of 23.0 mm was continuously rolled at a heating temperature of 1650°C using a multi-roll mill to prepare an 8.0 mm alloy rod;
Step 7: pressure processing: multi-pass rotary swaging was adopted. Then, the material was drawn through drawing dies of various sizes, and after repeated drawing passes, alloy wires with diameters of 58μm, 48μm, 38μm, 28μm, and 20μm were produced.

### Comparative Example 1.2

The material elemental composition comprises: 0.8wt% of cerium, 0.183wt% of oxygen, with the balance being tungsten and inevitable impurities;
The preparation steps are as follows:

Step 1: doping: a suitable amount of lanthanum nitrate solution was uniformly doped into blue tungsten powder. After thorough stirring, the powder was dried at a low temperature of 80°C for 4 hours and then at a high temperature of 120°C.
Step 2: reduction: the material obtained in step 1 was reduced in a four-temperature zone reduction furnace to reduce the doped powder into alloy powder of suitable particle size in one step.
Step 3: powder mixing: the materials obtained in step 2 was placed into a mixing machine according to different particle size compositions. The powder was mixed at a speed of 8 revolutions per minute for 80 minutes;
Step 4: powder pressing: powders of different particle sizes were pressed into compacts weighing 3.0 kg each using isostatic pressing at 200 MPa. The compacts were then pre-sintered at low temperature in a hydrogen atmosphere to increase their strength.

Step 5: high-temperature sintering: high-temperature sintering was performed to obtain sintered billets with a density of 18.10 g/cm$^3$.

Step 6: cogging: the sintered billet with a diameter of 23.0 mm was continuously rolled at a heating temperature of 1650°C using a multi-roll mill to prepare an 8.0 mm alloy rod;

Step 7: pressure processing: multi-pass rotary swaging was adopted. Then, the material was drawn through drawing dies of various sizes, and after repeated drawing passes, alloy wires with diameters of 58μm, 48μm, 38μm, 28μm, and 20μm were produced.

**Comparative Example 1.3 (Z element content exceeds 0.25wt%)**

The difference from Example 1.1 is that its material elemental composition comprises 0.4wt% of cerium, 0.4wt% of praseodymium, 0.1wt% of boron, 0.171wt% of oxygen, with the balance being tungsten and inevitable impurities; the remaining preparation steps are the same as in Example 1.1.

**Comparative Example 1.4 (the total content of the two L-element second phases exceeds 1.1wt%)**

The difference from Example 1.1 is that its material elemental composition comprises 0.6wt% of cerium, 0.6wt% of praseodymium, 0.03wt% of boron, and 0.274wt% of oxygen, with the balance being tungsten and inevitable impurities; the remaining preparation steps are the same as in Example 1.1.

**Comparative Example 2.1 (using deionized water as the solvent for L element)**

The material elemental composition is the same as that of Example 1.1. The difference between Comparative Example 2.1 and Example 1.1 is as follows:

Step 2: wet doping: the blue tungsten powder obtained in step 1 was uniformly dispersed in deionized water to obtain a blue tungsten suspension, in which the volume ratio of blue tungsten powder to deionized water was 1:15. An appropriate amount of boric acid crystal powder and deionized water were mixed at a volume ratio of 1:20 to obtain a boric acid solution; an appropriate amount of cerium nitrate and praseodymium nitrate crystal powder were dissolved in deionized water and added to the above blue tungsten suspension for thorough stirring and drying to obtain doped blue tungsten. The stirring speed was 40 r/min and the drying temperature was 160°C.

The remaining steps are the same as in Example 1.1.

**Comparative Example 2.2 (alloy powder obtained by one-step reduction)**

The material elemental composition is the same as that of Example 1.1. The difference between Comparative Example 2.2 and Example 1.1 is as follows:

Step 3: powder preparation: the doped blue tungsten powder obtained in step 2 was reduced in a four-temperature zone hydrogen reduction furnace at 650°C, 750°C, 850°C and 930°C, with a reduction rate of 20 min/boat, to obtain alloy powder with a particle size of 3.0 μm.

The remaining steps are the same as in Example 1.1.

**Comparative Example 2.3 (using a conventional drawing pass reduction ratio of 10% to 30%)**

The material elemental composition is the same as in Example 1.1. The difference between Comparative Example 2.3 and Example 1.1 is as follows:

Step 8: tungsten rods were subjected to redrawing processing through different specifications of drawing dies. The drawing passes were repeated with a reduction ratio of 10% to 30% to obtain tungsten alloy thick wire materials with a diameter specification of 0.5 mm.

The remaining steps are the same as in Example 1.1.

**Comparative Example 2.4.1 (cooled in air environment after annealing)**

The material elemental composition is the same as that of Example 1.1. The difference between Comparative Example 2.4.1 and Example 1.1 is as follows:

Step 9: annealing: when the tungsten alloy wire obtained in step 8 was processed to φ0.5 mm, it was annealed. After annealing, the tungsten alloy wire was cooled in an air environment. The annealing temperature for φ0.5 mm was 1600°C, and the mass percentage of oxide on the wire surface was 0.83%.

The remaining steps are the same as in Example 1.1.

**Comparative Example 2.4.2 (cooled in air environment after annealing)**

The material elemental composition is the same as in Example 1.1. The difference between Comparative Example 2.4.2 and Example 1.1 is as follows:
Step 9: annealing: when the tungsten alloy wire obtained in step 8 was processed to φ0.5 mm, it was annealed. After annealing, the tungsten alloy wire was cooled in an air environment. The annealing temperature for φ0.5 mm was 1650°C, and the mass percentage of oxide on the wire surface was 0.78%.
The remaining steps are the same as in Example 1.1.

**Comparative Example 2.4.3 (cooled in air environment after annealing)**

The material elemental composition is the same as that of Example 1.1. The difference between Comparative Example 2.4.3 and Example 1.1 is as follows:
Step 9: annealing: when the tungsten alloy wire obtained in step 8 was processed to φ0.5 mm, it was annealed. After annealing, the tungsten alloy wire was cooled in an air environment. The annealing temperature for φ0.5 mm was 1700°C, and the mass percentage of oxide on the wire surface was 0.65%.
The remaining steps are the same as in Example 1.1.

**Comparative Example 2.4.4 (cooled in air environment after annealing)**

The material elemental composition is the same as that of Example 1.1. The difference between Comparative Example 2.4.4 and Example 1.1 is as follows:
Step 9: annealing: when the tungsten alloy wire obtained in step 8 was processed to φ0.5 mm, it was annealed. After annealing, the tungsten alloy wire was cooled in an air environment. The annealing temperature for φ0.5 mm was 1550°C, and the mass percentage of oxide on the wire surface was 0.61%.
The remaining steps are the same as in Example 1.1.

**Microstructure and Performance Testing**

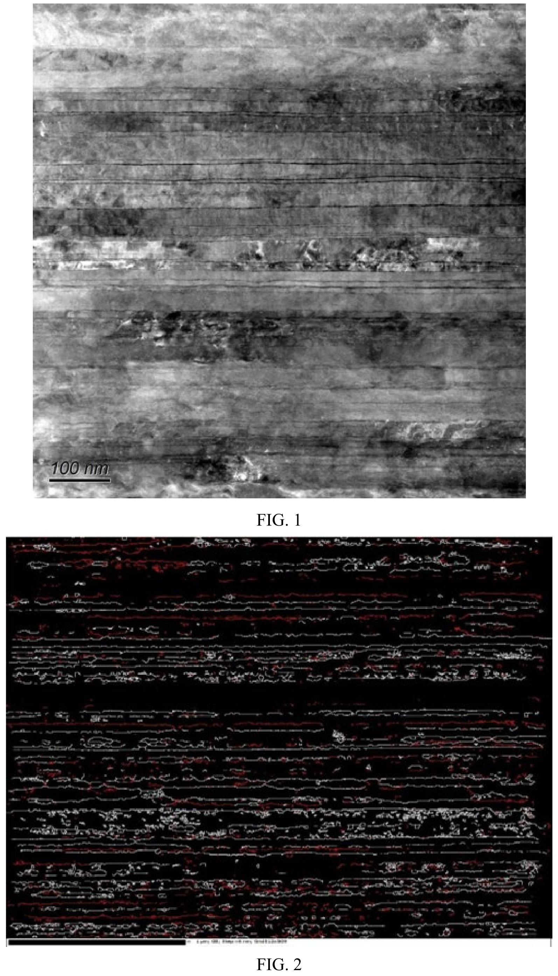

28 μm of tungsten alloy wire obtained in Example 1.1 was cut into thin slices along the axial direction of the tungsten alloy wire using a focused ion beam cutting device. The thin slices were then characterized in different modes using a high-resolution transmission electron microscope, resulting in FIG. 1 and FIG. 2.
In FIG. 1, the second-phase elements cerium and praseodymium exist in linear form, with 85 linear second phase lines and 11 tungsten grains. The ratio $\gamma$ of linear second-phase line number to tungsten grain number satisfies $\gamma \approx 7.7$.
In FIG. 2, the red lines represent grain boundary angles of tungsten grains greater than 15 degrees, while the white lines represent grain boundary angles of tungsten grains less than 15 degrees. The proportion of tungsten grains with a grain boundary angle ≤15° = the number of tungsten grains with a grain boundary angle ≤15° / (the number of tungsten grains with a grain boundary angle ≤15° + the number of grain boundary angles >15°) * 100%, in which 94% of the tungsten grains has a grain boundary angle ≤15°.
The tungsten alloy wires obtained in the examples and comparative examples are subjected to tensile strength tests and characterized by transmission electron microscopy. The $\gamma$ value is calculated, and the test results are shown in Tables 2-3.
The tensile strength test method is as follows: a standard tensile testing machine is used, a 200 mm long tungsten wire is clamped, and a constant speed loading is applied to one end to obtain the breaking force data;
Tensile strength is calculated using the following formula:

$$\sigma = F/S,$$

where F is the breaking force, in N; and S is the original cross-sectional area, in mm.

Table 2

| Sample | Wire Diameter μm | Tensile strength MPa | L Radial Average Width nm |
|---|---|---|---|
| Example 1.1 | 58 | 5590 | 3.8 |
| | 48 | 5980 | 2.2 |

(continued)

| Sample | Wire Diameter μm | Tensile strength MPa | L Radial Average Width nm |
|---|---|---|---|
| | 38 | 6750 | 1.1 |
| | 28 | 7780 | 0.9 |
| | 20 | 8120 | 0.6 |
| Example 1.2 | 58 | 5480 | 4.9 |
| | 48 | 5860 | 3.4 |
| | 38 | 6550 | 2.3 |
| | 28 | 7530 | 1.6 |
| | 20 | 8020 | 1.2 |
| Example 1.3 | 58 | 5070 | 3.9 |
| | 48 | 5550 | 2.4 |
| | 38 | 6120 | 1.2 |
| | 28 | 7080 | 0.9 |
| | 20 | 7500 | 0.7 |
| Example 1.4 | 58 | 5850 | 4.8 |
| | 48 | 6180 | 3.6 |
| | 38 | 7030 | 2.5 |
| | 28 | 7990 | 1.8 |
| | 20 | 8360 | 1.4 |
| Comparative Example 1.1 | 58 | 4980 | 8.3 |
| | 48 | 5380 | 6.8 |
| | 38 | 6190 | 4.2 |
| | 28 | 6650 | 3.4 |
| | 20 | 6850 | 2.9 |
| Comparative Example 1.2 | 58 | 4850 | 9.2 |
| | 48 | 5390 | 7.3 |
| | 38 | 6120 | 4.8 |
| | 28 | 6490 | 3.9 |
| | 20 | 6810 | 3 |
| Comparative Example 1.3 | 70 | / | / |
| Comparative Example 1.4 | 70 | / | / |
| Comparative Example 2.1 | 28 | 6480 | 3.6 |
| Comparative Example 2.2 | 28 | 6464 | 3.3 |
| Comparative Example 2.3 | 28 | 5930 | 3.7 |
| The "/" indicates that there is no corresponding data. | | | |

The surface defect number, average tungsten grain diameter, radial average width of L or L compound, and dislocation density of the tungsten alloy wires obtained from the examples and comparative examples are measured, and the results are shown in Table 3.

The method for measuring the number of surface defects is as follows: the obtained tungsten alloy wire is subjected to surface defect detection by an eddy current flaw detector, and a flaw detection signal depth exceeding 15% of the diameter is defined as a defect;

The method for measuring the radial average width of tungsten grains is as follows: a thin slice is cut along the axial direction of the wire using a focused ion beam cutting device. The thin slice is placed in a scanning electron microscope with a backscatter diffraction (EBSD) instrument to collect the morphology of the tungsten grains in the sample to be tested. The width of the upper and lower grain boundaries is measured using conventional measurement software, which is the radial width of the tungsten grains. The average value of the measured widths of multiple tungsten grains is the radial average width of the tungsten grains.

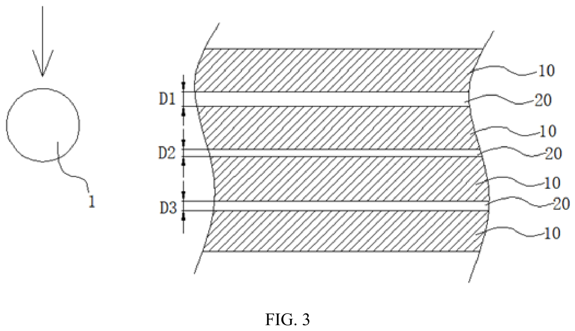

The radial average width measurement method for L or L compound is as follows: As shown in FIG. 3, a thin slice is cut along the axial direction of the tungsten alloy wire 1 using a focused ion beam cutting device. The thin slice is placed in a high-resolution transmission electron microscope. The morphology is first observed using a bright-dark field mode. A surface scan is performed at a position with obvious contrast in morphology, and a line scan is performed perpendicular to the axial direction of the tungsten alloy wire to obtain the elemental distribution and elemental composition information. The high-resolution image of the second phase is obtained by photographing the position in the sample with obvious contrast in morphology and obvious difference in elemental distribution (i.e., the position of the aggregation region of each element in the second phase). The high-resolution image is then subjected to Fourier transform to obtain the lattice diffraction pattern. Using the obtained second-phase diffraction pattern and the elemental composition information of the second phase, the phase corresponding to each diffraction pattern is identified. After confirming that the phase is an L or L compound by comparing it with the phase card, the software measures the width of the L or L compound. In Figure 3, 10 represents the tungsten matrix and 20 represents the L or L compound. The average value is calculated after measuring the width of multiple Ls, which is the radial average width of the L or L compound. It is understandable that, for ease of explanation, FIG. 3 shows a partial cross-section of the tungsten alloy wire sheet, not the entire sheet.

The method for testing dislocation density is as follows: a thin slice is cut along the axial direction of a tungsten alloy wire using a focused ion beam cutting device. The slice is then placed in a high-resolution transmission electron microscope to directly observe the lattice pattern and obtain dislocations. The number of dislocation lines passing through a unit cross-sectional area is calculated to obtain the dislocation density.

Table 3

| Sample | Wire Diameter $\mu$m | Number of Surface Defects number/ per 100 meters | Single Coil Length km | Radial Average Width of TungstenGrains nm | $\gamma$ | Dislocation Density *10⁹/mm² |
|---|---|---|---|---|---|---|
| Example 1.1 | 28 | 2.8 | 362 | 64 | 7.7 | 6.8 |
| Example 1.2 | 28 | 3.7 | 334 | 76 | 6 | 10.2 |
| Example 1.3 | 28 | 1.5 | 396 | 77 | 3.2 | 5.5 |
| Example 1.4 | 28 | 5.2 | 278 | 58 | 9.5 | 11.4 |
| Comparative Example 1.1 | 28 | 6.9 | 159 | 98 | 2.7 | 14.3 |
| Comparative Example 1.2 | 28 | 8.6 | 151 | 55 | 2.9 | 13.5 |
| Comparative Example 1.3 | 70 | / | / | / | / | / |
| Comparative Example 1.4 | 70 | / | / | / | / | / |
| Comparative Example 2.1 | 28 | 22.2 | 103 | 88 | 2.7 | 5.3 |
| Comparative Example 2.2 | 28 | 20.7 | 109 | 83 | 2.8 | 4.6 |
| Comparative Example 2.3 | 28 | 23.9 | 91 | 104 | 2.2 | 4.1 |
| The "/" indicates that there is no corresponding data. | | | | | | |

It is shown in Tables 2 and 3 that:
The tungsten alloy wires provided in the present application have a tensile strength of over 5000 MPa at a wire diameter of 20 $\mu$m to 60 $\mu$m, and the tensile strength increases as the wire diameter decreases. At 28 $\mu$m, the tensile strength can reach over 7000 MPa. The number of surface defects on the wire is less than 10 per 100 meters. At 28 $\mu$m, L or L compounds exist in a linear form with a radial average width of less than 4 nm. The radial average width of the tungsten grains is less than 80 nm. The dislocation density in the wire is >5*10⁹/mm². The ratio $\gamma$ of the number of the L or L compound in the wire to the number of tungsten grains satisfies: $3 \leq \gamma \leq 10$.

It is shown from the comparison results between Comparative Examples 1.1 and 1.2 and Example 1.1 that: The tungsten alloy wire preparation method provided in the present application can effectively improve the tensile strength of the wire compared with existing processes. The reason is that the single L-element second-phase merges and grows during high-temperature sintering and recrystallization annealing, resulting in a wider radial average width of L-element. Furthermore, the second-phase particles cause more cracks and wire breaks during subsequent pressure processing, affecting the mechanical strength and processing performance of tungsten alloy wire. With the rapid increase in cracks, the number of wire breaks during wire drawing increases significantly. As can be seen from the data in Table 3, the number of surface defects on the wire increases significantly, leading to a deterioration in the processing performance of the wire and a sharp decrease in the average length of wire per coil.

It is shown from the comparison results between Comparative Example 1.3 and Example 1.1 that: When the Z element content in the tungsten alloy composition exceeds 0.25wt%, the Z element forms a solid solution with W, which effectively increases the lattice distortion of tungsten, improves the deformation rate of tungsten wire, and thus improves the tensile strength of tungsten wire. However, the introduction of too much Z element will cause the dislocation density of tungsten alloy wire to increase significantly during the deformation process, which will lead to an excessively rapid work-hardening rate of tungsten alloy wire, making it difficult to refine the wire to below 60 $\mu$m.

It is shown from the comparison results between Comparative Example 1.4 and Example 1.1 that: When the total content of the two L-element second phases in the tungsten alloy composition exceeds 1.1wt%, the amount of second phase in the tungsten alloy wire is too large, and the ratio $\gamma$ of the number of second phases to the number of tungsten grains is too high, resulting in insufficient bonding force between the grains of the tungsten alloy wire. At the same time, the increase in the number of second phases will significantly increase the difficulty of dislocation slip, resulting in increased processing difficulty of tungsten alloy wire, making it impossible to process to below 60 $\mu$m.

It is shown from the comparison results between Comparative Example 2.1 and Example 1.1 that: When deionized water is used as the solvent for L element in the wet doping step, compared with the examples of the present application, the tungsten grain size and the average radial width of L increase at the same wire diameter level. This is because the dispersion of L element compounds in the doping process is insufficient, which leads to the local enrichment of L element during the tungsten powder nucleation process in the subsequent reduction process. After high-temperature sintering, these L element compounds grow together and merge, resulting in a significant reduction in the strengthening and refining effect of the actual tungsten grains, and a significant increase in the number of surface defects on the obtained tungsten alloy wire.

It is shown from the comparison results between Comparative Example 2.2 and Example 1.1 that: When alloy powder is prepared by one-step reduction in the powder preparation step, the average radial width L is also significantly increased, resulting in the tensile strength of the wire being much lower than that in Example 1.1. The number of surface defects of the tungsten alloy wire is significantly increased. This is because the tungsten alloy powder prepared by high-temperature one-step reduction is prone to local uneven doping during the reduction process, or agglomeration and enrichment after reduction, which leads to microscopic uneven doping of subsequent alloy powder, resulting in defects in the subsequent pressure processing process and increasing the risk of wire breakage.

**The grain boundary angle ratios of the tungsten alloy wires obtained in Examples 1.1, 1.3-1.4 and Comparative Example 2.3 are measured, and the results are shown in Table 4.**

The method for measuring the grain boundary angle ratio is as follows: a focused ion beam cutting device is used to cut a thin slice along the axial direction of the tungsten alloy wire. The thin slice is placed in a scanning electron microscope with backscatter diffraction (EBSD) to collect the orientation difference information between the tungsten grains and the surrounding tungsten grains of the thin slice sample. The grain boundary ratio with an angle difference ≤15° is measured.

Table 4

| Sample | Wire Diameter $\mu$m | Proportion % of Grain Boundary Angle ≤15° | Tensile Strength MPa |
|---|---|---|---|
| Example 1.1 | 58 | 83 | 5590 |
| | 48 | 87 | 5980 |
| | 38 | 91 | 6750 |
| | 28 | 94 | 7780 |
| Example 1.3 | 58 | 81 | 5070 |
| | 48 | 83 | 5550 |
| | 38 | 88 | 6120 |
| | 28 | 92 | 7080 |

(continued)

| Sample | Wire Diameter μm | Proportion % of Grain Boundary Angle ≤15° | Tensile Strength MPa |
|---|---|---|---|
| Example 1.4 | 58 | 86 | 5850 |
| | 48 | 89 | 6180 |
| | 38 | 92 | 7030 |
| | 28 | 95 | 7990 |
| Comparative Example 2.3 | 58 | 55 | 4650 |
| | 48 | 62 | 4860 |
| | 38 | 69 | 5450 |
| | 28 | 73 | 5930 |

It is shown from the comparison results between Comparative Example 2.3 and Example 1.1 that:
When a conventional drawing pass reduction ratio of 10% to 30% is used in the pressure processing step, the average radial width of the wires of various specifications is relatively large, and the average width of the tungsten grains is significantly increased. The significant increase in the average width of the tungsten grains is characterized by a decrease in the proportion of tungsten grain boundary angles ≤15°, which leads to more cracks and wire breaks caused by second-phase particles during subsequent pressure processing, thus affecting the tensile strength.

It is demonstrated that the use of a large reduction ratio of 35% to 60% in the present application during tungsten alloy wire processing results in more developed wire fibers. This facilitates the linearization of L elements and their compounds during processing, and accelerates the deformation of tungsten grain boundaries, thereby improving the tensile strength of the wire.

**The number of surface defects and the average length of the tungsten alloy wires obtained in Examples 1.1, 1.3-1.4 and Comparative Examples 2.4.1-2.4.4 were measured, and the results are shown in Table 5.**

Table 5

| Sample | Surface oxide after annealing at φ0.5mm wt% | Processed to the product line diameter μm | Number of Surface Defects number/ per 100 meters | Wire Length km |
|---|---|---|---|---|
| Example 1.1 | 1.12 | 28 | 2.8 | 362 |
| Example 1.3 | 1.14 | 28 | 1.5 | 396 |
| Example 1.4 | 1.06 | 28 | 5.2 | 278 |
| Comparative Example 2.4.1 | 0.83 | 28 | 12.9 | 108 |
| Comparative Example 2.4.2 | 0.78 | 28 | 15.3 | 92 |
| Comparative Example 2.4.3 | 0.65 | 28 | 17.1 | 83 |
| Comparative Example 2.4.4 | 0.61 | 28 | 22.3 | <10 |

It is shown from the comparison results between Comparative Examples 2.4.1-2.4.4 and Example 1.1 that:
When the mass percentage of oxides on the wire surface is less than 1% during the annealing process, the tungsten alloy wire will undergo multiple drawing processes after annealing. Due to insufficient surface lubrication, the surface hardening rate of the wire will increase significantly, resulting in a substantial increase in the number of surface defects. Ultimately, this will lead to the inability to stably produce products that meet the required length. The surface oxide percentage of the tungsten alloy wire in the present application is greater than or equal to 1%.

Finally, it should be noted that the above examples are only used to illustrate the technical solution of the present application, and not to limit it; although the present application has been described in detail with reference to the aforementioned examples, those skilled in the art should understand that they can still modify the technical solutions described in the aforementioned embodiments, or equivalently replace some or all of the technical features; and these modifications or substitutions do not deviate from the essence of the corresponding technical solutions from the scope of the various embodiments of the present application.

Claims

1. A tungsten alloy wire, wherein the tungsten alloy is composed of the following elements in percentage by mass: 0.4wt% to 1.1wt% of L, 0.001wt% to 0.25wt% of Z and the balance being tungsten and inevitable impurities;

   wherein the L is one or more selected from the group consisting of lanthanum, cerium, praseodymium, neodymium, gadolinium and erbium;
   the Z comprises oxygen and boron; and
   the tungsten alloy wire has a wire diameter ranging from 20 $\mu$m to 60 $\mu$m, and has linear forms of the L or an L compound along the axial direction of the tungsten alloy wire, and the L or L compound has a radial average width D of less than or equal to 5 nm.

2. The tungsten alloy wire according to claim 1, wherein the Z further comprises carbon.

3. The tungsten alloy wire according to claim 1, wherein,

   in the wire, tungsten grains have a radial average width of less than or equal to 80 nm; and
   a ratio $\gamma$ of the number of the L or L compound in the wire to the number of tungsten grains satisfies: $3 \leq \gamma \leq 10$.

4. The tungsten alloy wire according to claim 1, wherein the wire has a dislocation density of greater than or equal to $5*10^9/mm^2$.

5. The tungsten alloy wire according to claim 1, wherein,

   when the wire diameter of the wire is >50 $\mu$m and $\leq$60 $\mu$m, the radial average width D of the L or L compound is $\leq$5nm, and the tensile strength of the wire is $\geq$5000 MPa;
   when the wire diameter of the wire is >40 $\mu$m and $\leq$50 $\mu$m, the radial average width D of the L or L compound is $\leq$4 nm, and the tensile strength of the wire is $\geq$5500 MPa;
   when the wire diameter of the wire is >30 $\mu$m and $\leq$40 $\mu$m, the radial average width D of the L or L compound is $\leq$3 nm, and the tensile strength of the wire is $\geq$6000 MPa;
   when the wire diameter of the wire is $\geq$20 $\mu$m and $\leq$30 $\mu$m, the radial average width D of the L or L compound is $\leq$2 nm, and the tensile strength of the wire is $\geq$7000 MPa; and
   the number of surface defects on the wire is $\leq$10 per 100 meters.

6. A method for preparing the tungsten alloy wire according to any one of claims 1 to 5, wherein the method comprises wet doping, powdering, pressing, sintering, cogging and pressure processing.

7. The method for preparing the tungsten alloy wire according to claim 6, wherein the wet doping process comprises: uniformly dispersing blue tungsten powder in deionized water to obtain a blue tungsten suspension; uniformly dispersing a nanopowder of the L compound in an alkaline solution with pH>11 to form a second suspension; then spraying a solution containing Z element and the second suspension into the blue tungsten suspension in sequence; and heating and drying to obtain doped blue tungsten powder;

   the powdering process comprises: reducing the doped blue tungsten powder to obtain alloy powder A with a particle size ranging from 1.5 $\mu$m to 2.6 $\mu$m and alloy powder B with a particle size ranging from 3.8 $\mu$m to 4.5 $\mu$m; and then mixing the alloy powder A and the alloy powder B to obtain a mixed powder;
   the sintering process comprises: subjecting the pre-sintered billet obtained by the pressing to electric current sintering in two stages: the first sintering at a current intensity of 60% of a tungsten bar melting current for 30 to 45 minutes followed by cooling, and the second sintering at the current intensity of 90% to 92% of the tungsten bar melting current for 40 to 80 minutes, to obtain a sintered billet with a density of 18.6 g/cm$^3$ or higher; and
   the pressure processing process comprises: recrystallizing and annealing the alloy rod obtained from the cogging; then swaging the annealed alloy rod into a tungsten rod with a diameter ranging from 2.5 mm to 4.0 mm through multiple passes of continuous swaging apparatus; and subjecting the tungsten rod to coarse drawing through drawing dies of different specifications, wherein the coarse drawing is repeated multiple times with a reduction ratio ranging from 35% to 60% per pass, thereby obtaining a coarse tungsten alloy wire with a diameter ranging from 0.3 mm to 0.5 mm.

8. The method for preparing the tungsten alloy wire according to claim 7, wherein

in the wet doping process, the blue tungsten powder is prepared by feeding ammonium paratungstate powder into a reduction furnace and conducting reduction at 400°C to 600°C under an atmosphere of hydrogen and nitrogen, wherein the ammonium paratungstate powder has a bed thickness of less than 10 mm, the hydrogen flow rate in the reduction furnace is in a range from 20 L/min to 40 L/min, the nitrogen flow rate is in a range from 80 L/min to 160L/min, and the resulting blue tungsten powder has an oxygen index of 2.85±0.05 with an ammonium tungsten bronze phase content of greater than 80%;

in the powdering process, the alloy powder A is prepared by first reducing the doped blue tungsten powder in a hydrogen reduction furnace at 500°C to 800°C, followed by a second reduction in the hydrogen reduction furnace, to obtain the alloy powder A with the particle size ranging from 1.5 $\mu$m to 2.6 $\mu$m; the alloy powder B is prepared by reducing the doped blue tungsten powder in the hydrogen reduction furnace at 700°C to 1100°C to obtain the alloy powder B with the particle size ranging from 3.8 $\mu$m to 4.5$\mu$m; and the alloy powder A and the alloy powder B are mixed at a mass ratio of 1:(1-4);

in the pressure processing, the alloy rod obtained from the cogging is heated to 2000°C to 2600°C by a medium- or high-frequency induction coil and then subjected to recrystallization annealing; when the tungsten alloy wire is drawn to a diameter ranging from 0.3 mm to 0.5mm, it is annealed at an annealing temperature ranging from 1300°C to 1800°C, and after the annealing, the tungsten alloy wire is cooled in an oxygen-containing environment; and after the annealing, the tungsten alloy wire is drawn repeatedly to obtain tungsten alloy wires of different diameter specifications.

9. Use of the tungsten alloy wire according to any one of claims 1 to 5 in the fields of cutting, cut-resistant protection, cables, screen printing, ropes or textiles.

10. Use of the tungsten alloy wire according to any one of claims 1 to 5 in semiconductor material cutting.

FIG. 1

FIG. 2

FIG. 3

## INTERNATIONAL SEARCH REPORT

International application No.

**PCT/CN2024/139851**

| A. | CLASSIFICATION OF SUBJECT MATTER |
|---|---|

C22C27/04(2006.01)i; C22C1/04(2023.01)i; C22C1/059(2023.01)i; B22F5/12(2006.01)i; B22F3/10(2006.01)i; B22F3/17(2006.01)i; B22F9/22(2006.01)i

According to International Patent Classification (IPC) or to both national classification and IPC

| B. | FIELDS SEARCHED |
|---|---|

Minimum documentation searched (classification system followed by classification symbols)

IPC:C22C B22F

Documentation searched other than minimum documentation to the extent that such documents are included in the fields searched

Electronic data base consulted during the international search (name of data base and, where practicable, search terms used)

CNTXT, DWPI, CNKI, EPODOC: 硼, 硼酸, 碳, 钨, 钨合金, 稀土, 氧, 钆, 钕, 铈, 铒, 镧, 镨, Boron, boric acid, carbon, tungsten, tungsten alloys, rare earths, oxygen, gadolinium, neodymium, cerium, erbium, lanthanum, praseodymium

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114888292 A (SHAANXI HUILIAN POLYMERIZATION NEW MATERIAL CO., LTD. et al.) 12 August 2022 (2022-08-12) description, paragraphs 5, 7, and 26 | 1-10 |
| Y | CN 117020216 A (TIANJIN UNIVERSITY) 10 November 2023 (2023-11-10) description, paragraphs 6-11 and 29 | 1-10 |
| A | FR 460556 A (ERNST AUGUST KRUEGER) 05 December 1913 (1913-12-05) entire document | 1-10 |
| A | US 4950327 A (SCHWARZKOPF DEVELOPMENT CORP.) 21 August 1990 (1990-08-21) entire document | 1-10 |
| A | CN 117004857 A (CENTRAL SOUTH UNIVERSITY) 07 November 2023 (2023-11-07) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 March 2025** | **28 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/139851** |

| Patent document cited in search report | | | Publication date (day/month/year) | Patent family member(s) | | | Publication date (day/month/year) |
|---|---|---|---|---|---|---|---|
| CN | 114888292 | A | 12 August 2022 | None | | | |
| CN | 117020216 | A | 10 November 2023 | None | | | |
| FR | 460556 | A | 05 December 1913 | None | | | |
| US | 4950327 | A | 21 August 1990 | ATA | 15887 | A | 15 February 1988 |
| | | | | AT | 386612 | B | 26 September 1988 |
| | | | | WO | 8805830 | A1 | 11 August 1988 |
| | | | | DE | 3865259 | D1 | 07 November 1991 |
| | | | | JPH | 01502680 | A | 14 September 1989 |
| | | | | JP | 2609212 | B2 | 14 May 1997 |
| | | | | EP | 0299027 | A1 | 18 January 1989 |
| | | | | EP | 0299027 | B1 | 02 October 1991 |
| CN | 117004857 | A | 07 November 2023 | None | | | |

Form PCT/ISA/210 (patent family annex) (July 2022)

**EP 4 745 255 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023118259397

- CN 113186438 A